# EUROPÄISCHE PATENTSCHRIFT

(11) **EP 0 659 687 B1**
(45) Veröffentlichungstag und Bekanntmachung des Hinweises auf die Patenterteilung: **25.09.1996**
(21) Anmeldenummer: 94119605.7
(22) Anmeldetag: 12.12.1994
(51) Int. Cl.: C01G 23/053, C22B 34/12

(54) **Verfahren zur Herstellung von Titandioxid**
Process for the preparation of titanium dioxide
Procédé de préparation de dioxyde de titane

(30) Priorität: 24.12.1993 DE 4344359
(43) Veröffentlichungstag der Anmeldung: 28.06.1995
(73) Patentinhaber: BAYER AG, 51368 Leverkusen (DE)
(72) Erfinder: Kröckert, Bernd, Dr., D-46487 Wesel (DE); Velleman, Klaus-Dieter, Dr., D-51375 Leverkusen (DE); Bockelmann, Wolfgang, Dr., D-47800 Krefeld (DE); Wiederhöft, Gerhard, D-47802 Krefeld (DE); Lailach, Günter, Dr., D-47799 Krefeld (DE)

(56) Entgegenhaltungen:
- EP-A- 0 393 430

## Beschreibung

Die Erfindung betrifft ein Verfahren zur Herstellung von Titandioxid nach dem Sulfatverfahren, bei dem die Wäsche des gefällten Titanoxidhydrates fraktioniert durchgeführt wird und die Fraktionen sowie die Dünnsäure rezykliert werden.

Bei der Herstellung von Titandioxid nach dem Sulfatverfahren wird der titanhaltige Rohstoff, z.B. Ilmenit oder Schlacke mit Schwefelsäure aufgeschlossen. Nach Auflösen des Aufschlußkuchens und Abtrennung unlöslicher Bestandteile erhält man eine schwefelsaure, titanhaltige Lösung. Diese sogenannte Schwarzlösung enthält Titan in gelöster Form als Titanylsulfat. Bei der folgenden Hydrolyse entsteht ein Niederschlag aus Titanoxidhydrat und Dünnsäure. Der Feststoff wird abgetrennt, gewaschen und zum Endprodukt verarbeitet. Die Dünnsäure wird mit Kalk oder ähnlichen Verbindungen neutralisiert und deponiert oder durch Aufkonzentrierung so konditioniert, daß die Säure wieder im Erzaufschluß verwendet kann. Die bei der Autkonzentrierung anfallenden Salze werden gespalten und die Spaltprodukte (SO₂ und Abbrand) weiterverwertet (EP-A 457 120; DE-A-3 329 841; DE-A-3 329 842; EP-A-418 544; EP-A-302 337).

Die bei der Hydrolyse entstehende Dünnsäure enthält verfahrensbedingt und je nach Konzentration der Säure 1 bis 15 g/l TiO₂, gelöst als Titanylsulfat. Damit wird ein großer Teil des Wertstoffes TiO₂ entweder deponiert oder als Abbrand anderen Verwendungen (wie z.B. als Zuschlag im Zement) zugeführt (Ullmanns Encyklopädie der technischen Chemie, 4. neu bearbeitete Auflage, Band 18, S 574).

In EP-A-393 430 wird ein Recycling-Prozeß des bei der Wäsche des Titanoxidhydrates anfallenden Waschwassers und der Dünnsäure beschrieben. Dabei wird die erste Fraktion A aus der Wäsche mit der Dünnsäure vereinigt und einem Entsorgungs- oder Recycling-Prozeß zugeführt. Die zweite Fraktion B mit einer Konzentration von 7 bis 23 Gew.-% H₂SO₄ wird anstelle von Wasser bei der Titanylsulfathydrolyse eingesetzt. Die dritte Fraktion C mit einer H₂SO₄-Konzentration von 0,2 bis 7 Gew.-% wird zum Lösen der beim Aufschluß gebildeten Aufschlußmasse verwendet. Ein gegebenenfalls als vierte Fraktion D anfallendes Waschwasser mit sehr geringer H₂SO₄-Konzentration wird anstelle von Wasser zum Waschen des Hydrolysates verwendet oder als Abwasser abgeleitet. Die anfallende Dünnsäure hat bevorzugt eine Konzentration von >23 % H₂SO₄. Dadurch sind die Verluste am Wertstoff TiO₂ nach diesem Verfahren, das auf die möglichst vollständige Rezyklierung einer Dünnsäure mit hoher Konzentration und der Waschwässer in den Titandioxidprozeß zielte, hoch.

Aufgabe der vorliegenden Erfindung war es, ein Verfahren zur Herstellung von Titandioxid nach dem Sulfatverfahren zur Verfügung zu stellen, bei dem möglichst wenig TiO₂-Wertstoff aus dem Prozeß verloren geht, gleichzeitig keine Abwässer anfallen bzw. die Dünnsäure und die Waschwässer rezykliert werden können, ohne daß dabei der Gesamtprozeß oder die Titandioxidqualität beeinträchtigt werden.

Diese Aufgabe konnte mit dem erfindungsgemäßen Verfahren gelöst werden. Überraschenderweise wurde nämlich gefunden, daß bei Dünnsäurekonzentrationen von <23 Gew.-% H₂SO₄, vorzugsweise 20 bis 22 Gew.-% H₂SO₄, und Eisengehalten in der Dünnsäure von <3,5 Gew.-%, vorzugsweise <3 Gew.-%, gelöstem Eisen die Menge an gelöstem TiO₂-Wertstoff Klein ist, so daß weniger Wertstoff aus dem Prozeß verloren geht.

Gegenstand der Erfindung ist ein Verfahren zur Herstellung von Titandioxid nach dem Sulfatverfahen durch Aufschluß von titanhaltigen Rohstoffen mit Schwefelsäure unter Bildung eines Aufschlußkuchens, Lösen des Aufschlußkuchens unter Bildung von sogenannter Schwarzlösung, gegebenenfalls Reduktion und Klärung der Schwarzlösung, gegebenenfalls Kristallisation und Abtrennung von Eisen(II)sulfat aus der Schwarzlösung, thermische Hydrolyse der Schwarzlösung unter Bildung von Titanoxidhydrat und sogenannter Dünnsäure, Wasche des Titanoxidhydrates, Kalzinierung des Titanoxidhydrates zu Titandioxid und Rückführung des Waschwassers und der Dünnsäure in den Prozeß, welches dadurch gekennzeichnet ist, daß die Wäsche des Titanoxidhydrates fraktioniert durchgeführt wird, wobei die erste Fraktion mit der Dünnsäure vereinigt wird und diese Mischung mit einer H₂SO₄-Konzentration von 20 bis 23 Gew.-%, vorzugsweise von 20 bis 22 Gew.-%, nach Aufkonzentrierung in den Aufschluß zurückgeführt wird, die zweite Fraktion mit einer H₂SO₄-Konzentration von 5 bis 15 Gew.-%, vorzugsweise von 7 bis 12 Gew.-%, dem Aufschluß oder dem Löseprozeß des Aufschlußkuchens zugeführt wird, die dritte Fraktion mit einer H₂SO₄-Konzentration von <5 Gew.-%, vorzugsweise <4 Gew.-%, besonders bevorzugt 0,5 bis 3 Gew.-%, in die Hydrolyse zurückgeführt wird und die Kristallisation von Eisen(II)sulfat so durchgeführt wird, daß die Dünnsäure mit <3,5 Gew.-%, vorzugsweise mit <3,0 Gew.-%, gelöstem Eisen anfällt.

Durch das erfindungsgemäße Verfahren, insbesondere durch die spezielle Kombination der einzelnen Maßnahmen ist es möglich, daß die Dünnsäure wie auch die Waschwässer vollständig rezykliert werden können bei gleichzeitigem, minimalem Wertstoffverlust. Erst die erfindungsgemäße Kombination der Maßnahmen wie die Rückführung der fraktionierten Waschwässer, die Eisenkonzentration sowie die Dünnsäurekonzentration gewährleistet einen minimalen Wertstoffverlust ohne gleichzeitige Beeinträchtigung des Gesamtprozesses und der Titandioxidqualität.

Die Dünnsäure mit der ersten Fraktion des Waschwassers wird nach Aufkonzentrierung nach üblichen Verfahren und Abtrennung der Salze in den Aufschluß zurückgeführt.

Sollte eine Dünnsäurekonzentration von <23 Gew.-% H₂SO₄ nicht ohne weiteres erreicht werden können, so wird die Fraktion 3 teilweise oder vollständig zur anfallenden Dünnsäure zugesetzt, bis eine Konzentration von unter 23 Gew.-% H₂SO₄ erreicht ist.

Der Eisengehalt in der Dünnsäure wird bevorzugt durch die Reduktion der Schwarzlösung mit anschließender Abtrennung des Eisen(II)sulfates erhalten.

Den Eisengehalt in der Dünnsäure auf <3,5 Gew.-% zu bekommen, kann auch dadurch erreicht werden, daß Ilmenit und Schlacke separat aufgeschlossen und im richtigen Verhältnis zueinander gemischt und weiterverarbeitet werden.

Das erfindungsgemäße Verfahren hat den Vorteil, daß die Dünnsäure und die Waschwässer in den Prozeß zurückgeführt werden können und nur noch wenig TiO₂-Wertstoff aus dem Prozeß verloren geht.

Die Erfindung soll anhand der nachfolgenden Beispiele näher erläutert werden. Bei den Prozentangaben handelt es sich um Gewichtsprozente, falls nicht anders angegeben.

### Beispiele

1,5 t Titanschlacke mit 8,5 Gew.-% Fe und 78,2 Gew.-% TiO₂ werden mit 1,5 t aufkonzentrierter Dünnsäure (76,7 Gew.-% H₂SO₄; aus der Wiederaufarbeitung gemäß EP-B-133 505) und 1,2 t Oleum (mit 105,8 Gew.-% H₂SO₄) aufgeschlossen. Unabhängig davon werden 1,5 t Ilmeniterz mit 31,2 Gew.-% Fe und 51,8 Gew.-% TiO₂ mit 1,5 t o.g. aufkonzentrierter Dünnsäure und 0,9 t Oleum (mit 105,8 Gew.-% H₂SO₄) aufgeschlossen. Die beim Aufschluß gebildeten Aufschlußmassen werden mit jeweils 0,7 m³ der bei der Hydrolysatwäsche anfallenden zweiten Fraktion (7,4 Gew.-% H₂SO₄) versetzt. Anschließend werden 1,0 m³ Waschlösung mit 35 g/l gelöstem TiO₂ aus der Wäsche der Aufschlußrückstände und 0,6 m³ Frischwasser zugesetzt. Die Lösungen werden anschließend filtriert.

Diese filtrierten Lösungen werden, bevor sie der Hydrolyse zugeführt werden, in verschiedenen Verhältnissen gemischt. Die Lösung aus dem Schlackeaufschluß (Dichte: 1,620 g/cm³) enthält dabei 15,5 Gew.-% TiO₂, 5,6 % Gew.-% Eisen und 35,5 Gew.-% H₂SO₄. Die Lösung aus dem Ilmenitaufschluß (Dichte: 1,590 g/cm³) enthält 10,5 Gew.-% TiO₂, 15,6 Gew.-% Eisen und 34,9 Gew.-% H₂SO₄.

### Mischungsverhältnisse:

| | | | | |
|---|---|---|---|---|
| 3,7 m³ | Lösung aus Schlackeaufschluß | 1 m³ | Lösung aus Ilmenitaufschluß | Vergleichsbeispiel 1 |
| 3,6 m³ | " | 1 m³ | " | Vergleichsbeispiel 2 |
| 3,9 m³ | " | 1 m³ | " | Vergleichsbeispiel 3 |
| 6,2 m³ | " | 1 m³ | " | Beispiel 4 |
| 5,5 m³ | " | 1 m³ | " | Beispiel 5 |
| 5,7 m³ | " | 1 m³ | " | Beispiel 6 |
| 4,8 m³ | " | 1 m³ | " | Beispiel 7 |

Jeweils 4,35 m³ der o.g. Mischungen werden bei der Hydrolyse mit 60 l Keimlösung (Keimlösung: separat hergestellt aus 37,1 l 11%iger NaOH-Lösung mit 22,9 l der Schwarzlösung) versetzt. Dieses Gemisch wird durch Einleiten von Dampf zum Sieden erhitzt; danach wird die Dampfeinleitung für 1,5 h unterbrochen und anschließend erneut Dampf eingeleitet und die Lösung weitere 2 Stunden gekocht. Während dieser Zeit werden verschiedene Mengen der dritten Fraktion aus der Hydrolysatwäsche mit 1,7 Gew.-% H₂SO₄ zugeführt (für die Vergleichsbeispiele 1, 2 und 3 jeweils 0,4 cm³ und für die Beispiele 4, 5, 6 und 7 jeweils 0,8 m³).

Die Filtration und Waschung des Niederschlags erfolgt nach dem Moore-Prinzip. Da es sich bei der Waschung um eine Verdrängungswäsche handelt, ist es möglich, während des Konzentrationsabfalls an H₂SO₄ im Filtrat das Waschwasser jeweils fraktioniert aufzufangen.

| Dünnsäure + erste Fraktion | [Gew.-%] H₂SO₄ | [Gew.-%] Fe (II) | [g/l]TiO₂ |
|---|---|---|---|
| Stand der Technik: 1 | 24,2 | 3,50 | 12,8 |
| 2 | 23,3 | 3,66 | 12,9 |
| 3 | 23,6 | 3,34 | 11,3 |
| | | | |
| erfindungsgemäß: 4 | 20,6 | 2,67 | 7,8 |
| 5 | 21,9 | 2,91 | 8,5 |
| 6 | 21,3 | 2,86 | 6,8 |
| 7 | 22,2 | 3,11 | 6,0 |

Die im erfindungsgemäßen Verfahren (Beispiele 4, 5, 6 und 7) erhaltene Dünnsäure enthält weniger Titansalze als die Dünnsäure aus dem Verfahren nach dem Stand der Technik, wodurch weniger TiO₂ dem TiO₂-Herstellungsverfahren verloren geht; gleichzeitig können die gesamte Dünnsäure sowie die Waschwässer zurückgeführt werden. Der Gesamtprozeß wird dabei nicht beeinträchtigt und die Titandioxidqualität bleibt erhalten.

## Patentansprüche

1. Verfahren zur Herstellung von Titandioxid nach dem Sulfatverfahren durch Aufschluß von titanhaltigen Rohstoffen mit Schwefelsäure unter Bildung eines Aufschlußkuchens, Lösen des Aufschlußkuchens unter Bildung von sogenannter Schwarzlösung, gegebenenfalls Reduktion und Klärung der Schwarzlösung, gegebenenfalls Kristallisation und Abtrennung von Eisen(II)sulfat aus der Schwarzlösung, thermische Hydrolyse der Schwarzlösung unter Bildung von Titanoxidhydrat und sogenannter Dünnsäure, Wäsche des Titanoxidhydrates, Kalzinierung des Hydrates zu Titandioxid und Rückführung des Waschwassers und der Dünnsäure in den Prozeß, dadurch gekennzeichnet, daß die Wäsche des Titanoxidhydrates fraktioniert durchgeführt wird, wobei die erste Fraktion mit der Dünnsäure vereinigt wird und diese Mischung mit einer H₂SO₄-Konzentration von 20 bis 23 Gew.-% nach Aufkonzentrierung in dem Aufschluß zurückgeführt wird, die zweite Fraktion mit einer H₂SO₄-Konzentration von 5 bis 15 Gew.-% dem Aufschluß oder dem Löseprozeß des Aufschlußkuchens zugeführt wird, die dritte Fraktion mit einer H₂SO₄-Konzentration von <5 Gew.-% in die Hydrolyse zurückgeführt wird und die Kritallisation von Eisen(II)sulfat so durchgeführt wird, daß die Dünnsäure mit <3,5 Gew.-% gelöstem Eisen anfällt.

2. Verfahren gemäß Anspruch 1, dadurch gekennzeichnet, daß die zweite Fraktion eine H₂SO₄-Konzentration von 7 bis 12 Gew.-% aufweist.

3. Verfahren gemäß Anspruch 1, dadurch gekennzeichnet, daß die dritte Fraktion eine H₂SO₄-Konzentration von <4 Gew.-%, insbesondere von 0,5 bis 3 Gew.-% aufweist.

4. Verfahren gemäß Anspsruch 1, dadurch gekennzeichnet, daß die Konzentration an gelöstem Eisen in der Dünsäure <3 Gew.-% ist.

5. Verfahren gemäß Anspruch 1, dadurch gekennzeichnet, daß die Dünnsäure mit einer H₂SO₄-Konzentration von 20 bis 22 Gew.-% anfällt.

6. Verfahren gemäß Anspruch 1, dadurch gekenzeichnet, daß die Dünnsäurekonzentration durch Zugabe entsprechender Mengen der Fraktion 3 zur anfallenden Dünnsäure erreicht wird.

7. Verfahren gemäß Anspruch 1, dadurch gekennzeichnet, daß der Eisengehalt in der Dünnsäure dadurch erreicht wird, daß Ilmenit und Schlacke in entsprechenden Verhältnissen aufgeschlossen werden.

8. Verfahren gemäß Anspruch 1, dadurch gekennzeichnet, daß der Eisengehalt in der Dünnsäure dadurch erreicht wird, daß Eisen(II)sulfat vor der Hydrolyse in der Aufschlußlösung ausgefällt und abgetrennt wird.

## Claims

1. Process for the production of titanium dioxide using the sulphate process by digesting raw materials containing titanium with sulphuric acid to form a digestion cake, dissolving the digestion cake to form a so-called black solution, optionally reducing and clarifying the black solution, optionally crystallising and separating iron (II) sulphate from the black solution, thermally hydrolysing the black solution to form titanium oxide hydrate and so-called thin acid, washing the titanium oxide hydrate, calcining the hydrate to yield titanium dioxide and returning the washing water and the thin acid to the process, characterised in that washing of the titanium oxide hydrate is performed fractionally, wherein the first fraction is combined with the thin acid and this mixture with an H₂SO₄ concentration of 20 to 23 wt.% is returned, after concentration, to the digestion, the second fraction with an H₂SO₄ concentration of 5 to 15 wt.% is passed to the digestion or the dissolving process of the digestion cake, the third fraction with an H₂SO₄ concentration of < 5 wt.% is returned to the hydrolysis and the crystallisation of iron (II) sulphate is performed in such a manner that the thin acid has a dissolved iron content of < 3.5 wt.%.

2. Process according to claim 1, characterised in that the second fraction has an H₂SO₄ concentration of 7 to 12 wt.%.

3. Process according to claim 1, characterised in that the third fraction has an H₂SO₄ concentration of < 4 wt.%, in particular of 0.5 to 3 wt.%.

4. Process according to claim 1, characterised in that the concentration of dissolved iron in the thin acid is < 3 wt.%.

5. Process according to claim 1, characterised in that the thin acid has an H₂SO₄ concentration of 20 to 22 wt.%.

6. Process according to claim 1, characterised in that the thin acid is concentrated by adding appropriate quantities of fraction 3 to the thin acid which is produced.

7. Process according to claim 1, characterised in that the iron content in the thin acid is achieved by digesting ilmenite and slag in appropriate ratios.

8. Process according to claim 1, characterised in that the iron content in the thin acid is achieved by precipitating and separating the iron(II) sulphate in the digestion solution prior to hydrolysis.

## Revendications

1. Procédé pour la préparation de dioxyde de titane conformément au procédé au sulfate par désagrégation de matières premières contenant du titane avec de l'acide sulfurique pour obtenir un gâteau issu de la désagrégation, dissolution du gâteau issu de la désagrégation pour obtenir ce que l'on appelle une solution noire, éventuellement réduction et clarification de la solution noire, éventuellement cristallisation et séparation du sulfate de fer(II) hors de la solution noire, hydrolyse thermique de la solution noire avec formation d'hydrate d'oxyde de titane et de ce que l'on appelle de l'acide dilué, lavage de l'hydrate d'oxyde de titane, calcination de l'hydrate pour obtenir du dioxyde de titane et recyclage des eaux de lavage et de l'acide dilué dans le procédé, caractérisé en ce qu'on effectue le lavage de l'hydrate d'oxyde de titane de manière fractionnée, la première fraction étant combinée avec l'acide dilué et ce mélange avec une concentration en H₂SO₄ de 20 à 23% en poids étant renvoyé dans la désagrégation après concentration, la deuxième fraction avec une concentration de H₂SO₄ de 5 à 15% en poids étant renvoyée à la désagrégation ou au processus de dissolution du gâteau issu de la désagrégation, la troisième fraction avec une concentration en H₂SO₄ < 5% en poids étant renvoyée dans l'hydrolyse et la cristallisation du sulfate de fer(II) étant réalisée de telle sorte que l'on obtient l'acide dilué avec < 3,5% en poids de fer dissous.

2. Procédé selon la revendication 1, caractérisé en ce que la deuxième fraction présente une concentration en H₂SO₄ de 7 à 12% en poids.

3. Procédé selon la revendication 1, caractérisé en ce que la troisième fraction présente une concentration en H₂SO₄ < 4% en poids, en particulier de 0,5 à 3% en poids.

4. Procédé selon la revendication 1, caractérisé en ce que la concentration en fer dissous dans l'acide dilué est < 3% en poids.

5. Procédé selon la revendication 1, caractérisé en ce qu'on obtient l'acide dilué avec une concentration en H₂SO₄ de 20 à 22% en poids.

6. Procédé selon la revendication 1, caractérisé en ce qu'on atteint la concentration de l'acide dilué par addition de quantités correspondantes de la fraction 3 à l'acide dilué que l'on obtient.

7. Procédé selon la revendication 1, caractérisé en ce que l'on atteint la teneur en fer dans l'acide dilué par le fait qu'on soumet à une désagrégation de l'ilménite et des scories dans des proportions correspondantes.

8. Procédé selon la revendication 1, caractérisé en ce qu'on atteint la teneur en fer dans l'acide dilué par précipitation et séparation du sulfate de fer(II) avant l'hydrolyse dans la solution de désagrégation.
